# EUROPÄISCHE PATENTSCHRIFT

(11) **EP 1 253 991 B1**
(45) Veröffentlichungstag und Bekanntmachung des Hinweises auf die Patenterteilung: **01.10.2003**
(21) Anmeldenummer: 01905754.6
(22) Anmeldetag: 09.02.2001
(51) Int. Cl.: B23K 11/25, B23K 11/31

(54) **WIDERSTANDSPUNKTSCHWEISS-STEUERVORRICHTUNG UND -STEUERVERFAHREN**
RESISTANCE SPOT WELDING CONTROL DEVICE AND METHOD
DISPOSITIF ET PROCEDE DE COMMANDE DE SOUDAGE PAR POINTS

(30) Priorität: 09.02.2000 DE 10005963
(43) Veröffentlichungstag der Anmeldung: 06.11.2002
(73) Patentinhaber: Reu-Schweisstechnik GmbH, 34225 Baunatal (DE)
(72) Erfinder: KAESELER, Werner, 34225 Baunatal (DE); MÜLLER, Horst, 34225 Baunatal (DE)
(74) Vertreter: Hanewinkel, Lorenz, Dipl.-Phys.
(86) Internationale Anmeldenummer: EP0101421
(87) Internationale Veröffentlichungsnummer: WO01058636

(56) Entgegenhaltungen:
- EP-A- 0 352 154
- EP-A- 0 813 928
- DE-A- 19 917 896
- US-A- 3 553 420
- US-A- 4 441 006
- US-A- 5 483 035

## Beschreibung

Die Erfindung betrifft eine Steuervorrichtung zum Punktschweißen mit einer Schweißzange, deren Schweißelektroden mit einem steuerbaren Schweißstromgenerator verbunden sind, und die durch einen elektromotorischen Antrieb, an dem ein Positionssensor angeordnet ist, mit dessen Signalen von einer Steuervorrichtung die Schweißzange Vorgaben gemäß auf und zu zu steuern ist, und wobei im geschlossenen Zustand der Schweißzange diese zwischen den .Schweißelektroden Schweißobjekte durch einen vorgegebenen Motorstrom zusammengepreßt hält, wobei der Schweißstromgenerator von der Steuervorrichtung zeitweilig aktiviert ist und wobei der Positionssensor ein Drehsignalgeber, Resolver ist und die Steuervorrichtung Überwachungsvorrichtungen umfaßt, denen die Drehgebersignale laufend zugeführt werden, und wobei sobald diese Überwachungsvorrichtung nach einer Zu-Steuerung der Schweißzange an den Drehgebersignalen einen Quasi-Stillstand erkennt, ein entsprechender erster Zustand als der geschlossene Zustand der Schweißzange gespeichert wird und der Schweißstromgenerator aktiviert wird und danach ein zeitlicher Verlauf einer Schweißelektrodendistanz aus den Resolversignalen ermittelt wird, abhängig von dem der Motorstrom und/oder der Schweißstrom des Schweißstromgenerators verändert vorgegeben werden, so daß der Verlauf der Schweißelektrodendistanz einem vorgespeicherten Verlauf einer optimalen Schweißung nahe kommt.

Eine derartige Schweißvorrichtung ist aus der DE 199 17 896 A bekannt. Bei dieser wird durch die Erfassung der Elektrodenposition und deren relative Änderung ein Abnutzungsmaß der Elektroden ermittelt, demgemäß eine Anpassung der Schweißparameter bezüglich Andruckkraft der Elektroden, der Schweißzeit und des Schweißstromwertes erfolgt. Die Messung der relativen Elektrodenposition wird durch die Übertragungsglieder, die zwischen den Elektroden und dem Motor mit den Maßmitteln liegen, nämlich ein stark übersetzendes Getriebe, bezüglich ihrer Genauigkeit sehr ungünstig beeinflußt, da toter Gang, Selbsthemmung in der Rückwärtsrichtung und Massenträgheit die größenmäßige und zeitmäßige Signalgabe beeinflussen.

Weiterhin ist aus der EP O 278 185 B1 eine Vorrichtung bekannt, bei der ein Elektromotor die Schweißzangen zu Beginn eines Schweißzyklus in einen geschlossenen Zustand steuert. Wenn danach ein Positionssensor einen geschlossenen Zustand feststellt, wird eine vorgegebene Schließkraft mittels einer Regelung des Motorantriebes an den Schweißelektroden aufrechterhalten und dann ein Schweißstrom den Elektroden zugeführt. Wird ein Kraftanstieg durch eine Ausdehnung der Schweißstelle infolge des Aufschmelzens detektiert, wird der Schweißstrom abgeschaltet und eine erhöhte Haltekraft für eine vorgegebene Zeit aufrechterhalten, wonach die Zangenöffnung erfolgt. Diese Steuerung erfordert Weg- und Kraftmeßmittel. Eine vollständige Überwachung des Schweißvorganges erfolgt nicht, so daß das Austreten von Spritzern und damit die Bildung von Lunkern in der Schweißstelle, insbesondere beim Schweißen hochlegierter Stahlbleche, nicht auszuschließen ist.

Eine ähnliche Vorrichtung und ein Verfahren für deren Betrieb ist aus der US 3,553,420 bekannt. Diese weist eine Elektrodenandruckvorrichtung mit einem hydraulischen Betätiger auf, dessen hydraulisches Medium nach einem Druckanstieg in diesem, der durch die Reaktionskraft beim Elektrodenandrücken und demzufolge dem Zusammendrücken der zu verschweißenden Objekte im Schweißbereich entsteht, mit einem Sperrventil im Betätiger gehalten wird, wonach der Schweißstrom auf die Elektroden appliziert wird und der Druck des Mediums mit einem Drucksensor überwacht wird, und, wenn der Druck durch eine thermische Ausdehnung des Schweißpunktes über ein vorgegebenes Maß angestiegen ist und anschließend wegen der Materialverflüssigung wieder zu sinken beginnt, wird der Schweißstrom reduziert oder sofort ganz abgeschaltet, worauf nach einer vorgegebenen Haltezeit das Sperrventil geöffnet wird und eine neue Positionierung des Objektes oder der Elektroden. vorgenommen wird.

Es sind weiterhin aus der DE 32 41 897 C2 Schweißvorrichtungen bekannt, bei denen die Schweißelektroden über eine Feder angedrückt werden, deren Federweg mit einem Sensor, z.B. einer Dehnungsmeßstreifenanordnung, und somit die Veränderung der Lage der Elektroden durch die thermische Ausdehnung und das anschließende Schmelzen gemessen und zur Schweißstromabschaltung und der Öffnungssteuerung genutzt wird. Dies bedeutet einen erheblichen Aufwand an Meßtechnik und eine Verkomplizierung der Andruckvorrichtung durch die Feder.

Es ist Aufgabe der Erfindung, die eingangs bezeichnete Vorrichtung zum gesteuerten und geregelten Schweißen zu vereinfachen und das Schweißergebnis zu verbessern.

Die Lösung der Aufgabe besteht darin, daß im geschlossenen Zustand der Motorstrom derart geregelt wird, daß eine Schweißelektrodendistanz, die durch eine Summierung der Drehgebersignale laufend ermittelt wird, nahezu konstant oder einem vorgegebenen zeitlichen Verlauf gemäß gehalten ist.

Vorteilhafte Ausgestaltungen sind in den Unteransprüchen angegeben.

Die neue Vorrichtung geht von einer modernen schnellarbeitenden, elektrischen, über eine Kraft- oder Wegregelvorrichtung angesteuerte Schweißzange aus. Für die Steuerung des Schweißvorganges werden keine zusätzlichen Meßmittel benötigt, wie bei den vorbekannten Vorrichtungen, sondern es werden die Mittel und Signale der elektrischen Kraft- oder Wegregelvorrichtung des Motorantriebes und somit der Schweißzange genutzt. Der elektrische Stellkreis für die Elektrodenbewegung und den Elektrodenandruck weist ein externes Sollsignal auf, mit dem der Strom bestimmt wird, der letztlich vom Motor ausgehend über die mechanischen Koppelelemente die Zangenbetätigung und den Elektrodenandruck erbringt. Eine hohe Genauigkeit der Elektrodenpositionsmessung wird dadurch erreicht, daß aufgrund der ständigen Motorstromregelung die Einflüsse des Getriebes abgefangen werden.

Ändert sich die Dicke des Schweißobjektes durch Erwärmung mit dem Schweißstrom, so wird bei einer konstanten Stromeinspeisung des Motors eine Wegänderung vom Wegsignalgeber, dem incremental arbeitenden Drehgeber, signalisiert, die der Schweißstromsteuerung oder -regelung dient.

Ist alternativ der Motorsteuerung nachdem eine bestimmte Andruckkraft gemäß einem bestimmten Strom erreicht ist, eine Konstanthaltung der Position des Drehsignalgebers vorgegeben, so steigt der entsprechend geregelte Motorstrom abhängig von der zunehmenden thermischen Dehnung zur Kompensation der Objektdickenänderung an, und dessen zeitlicher Antriebsstromverlauf wird nach Kriterien analysiert zur Schweißstromsteuerung oder - regelung genutzt.

Auch eine Kombination des Wegsignalverlaufes und des Motorstromverlaufes läßt sich vorteilhaft zur Schweißstromsteuerung oder - regelung verwenden, und eine zeitliche Folge der beiden Alternativen läßt sich vorteilhaft nutzen, wenn die Regelbezugsgröße variiert wird, indem z. B. anfangs die Wegkonstanzregelung genutzt wird, wobei die Stromänderung beobachtet und ausgewertet wird und gemäß einer Grenzwertvorgabe auf eine Stromkonstanzregelung übergegangen wird, wobei die Wegsignaländerung beobachtet und ausgewertet wird. Die jeweils für eine optimale Schweißung zu wählenden Parameter hängen von den zu verschweißenden Materialien, deren Oberflächeneigenschaften und -beschichtungen, dem Elektrodenzustand und den Geometrien der Objekte und Elektroden ab.

Das Schweißsteuerungsprogramm, das die Strom- und/oder Winkel- bzw. Weg-Meßwertauswertung vornimmt, ist bei geeigneter Korrelierung der verschiedenen Meßwertarten das gleiche. Die Korrelation ergibt sich aus dem Wegincrement, das ein Stromincrement durch die dazu auftretenden Drehgebersignale angibt.

Bei der Einschaltung des Schweißstromes liegt ein vorgegebener Ausgangsstrom des Reglers und eine Anfangsdistanz der Schweißelektroden zueinander vor. Mit zunehmender Temperatur im Schweißbereich steigt der Motorstrom und/oder vergrößert sich die Distanz der Elektroden, wodurch, z. B. incrementale, Wegsignale vom Drehgeber abgegeben werden, die zu einem Differenzdistanzwert bezogen auf die Anfangsdistanz akkumuliert werden. Eine Korrelation der Stromdifferenz zu der Wegdifferenz ist über die Stromänderung gegeben, die eine Distanzänderung um ein Increment ergibt. So korreliert lassen sich beide Änderungen summieren, und dieser Summenwert wird mit einem Schwellwert verglichen und dessen Überschreitung wird festgestellt, und/oder am Summenwertverlauf wird das Annähern an, das Erreichen oder das Überschreiten eines Maximums ermittelt.

Jeweils zu diesem genannten Zeitpunkt werden die Reglervorgaben, d. h. die Solldistanz und/oder der Sollstrom des Antriebes, der Schweißstromwert sowie ein Start einer Haltezeit und/oder ein neuer Schwellwert für den genannten Summenwert vorgegeben, bei deren Ende bzw. bei dessen Unterschreitung der Schweißstrom ganz abgeschaltet und dann die Schweißzange aufgesteuert wird.

Wird der Zeitpunkt des Annäherns, des Erreichens oder des Überschreitens des Maximums des Summenwertes aus den Messwerten genutzt, so wird der im Schweißpunkt auftretende Schmelzvorgang bezüglich einer kritischen Größe erfaßt und zu einem Abschaltkriterium des Schweißstromes gemacht. Die Teil- und/oder Vollabschaltung und die Beendigung der Haltezeit, die dem ungestörten Erstarren der Schweißlinse dient, wird bevorzugt mittels einer Zeitablaufsteuerung vorgenommen. Zu einer optimalen Gefügeausbildung bei Erkalten der Schweißlinse kann vorteilhaft eine erhöhte oder definiert abfallende Zangenkraft durch eine entsprechende Motorstromvorgabe angewandt werden.

Wird die Abschaltsequenz abhängig von einem Schwellwert gesteuert, so läßt sich trotzdem zeitlich das Überschreiten des Maximums, dessen Höhe und das weitere Abklingen der thermischen Veränderung der Schweißstelle ermitteln und, z. B. tabellarisch oder bildlich, darstellen, und es lassen sich vorteilhaft Grenzwertüberwachungen vornehmen, so daß stets eine gute Überwachung der Schweißung vorgenommen wird und unzulässige Änderungen der Verhältnisse, die z. B. durch Materialunterschiede oder Änderungen an der Oberfläche der Bleche oder den Elektroden, sowie im Antriebssystem auftreten erkannt und durch neue Vorgaben kompensiert werden können oder an einen Bediener oder ein übergeordnetes System gemeldet werden sowie zwecks Wartungshilfe und Qualitätskontrolle archiviert werden.

Im folgenden ist ein Verfahrensablauf aufgelistet:
A - Schweißzange in Position ans Werkstück bringen, dann
B - Schweißzangen-Schließsteuerung vornehmen bis, das Winkel- bzw. Wegsignal und der Zangenantriebsstrom eine Zeit lang konstant sind, dann
C - Schweißstrom einschalten und Wegsignal und/oder Zangenantriebsstrom auf Erreichen des Maximums überwachen. Nach dessen erreichen:
D - Schweißstrom abschalten; Zangenantriebsstrom nach Zeit-, Weg- und Kraft-Vorgabe steuern; Haltezeitablauf überwachen. Nach dem Zeitablauf:
E - Zangenantrieb auf Öffnen der Zange steuern bis vorgegebene Distanz erreicht ist.

### -Weiter wie A-.

Die Ermittlungen des Maximums der thermischen Veränderung der Schweißstelle durch das Erkennen der Stromkonstanz und/oder des Stillstandes des Zangenantriebes werden unter geeigneten Filtermaßnahmen und/oder bei bestimmten Ansprechbandbreiten der Signalauswertung vorgenommen, da mit Unstetigkeiten im Kraft-, Weg- und Stromverlauf zu rechnen ist, die u. a. aufgrund der Increment-Decrementsignalgabe am Wegmelder sowie durch externe Störungen oder von Regelschwingungen kleinerer Amplitude auftreten.

Für den Schließantrieb der Schweißzange sind besonders gut Selbsthemmungslose Kugelrollspindelantriebe geeignet, die ein relativ hohes Kraft-Gewichtverhältnis haben. Der Motor ist ein bürstenloser Drehstrom- oder Gleichstrommotor. An seiner Welle ist ein Drehsignalgeber, ein sogenannter Drehgeber, d. h. ein Schrittsignalgeber, der richtungsabhängige Impulse abgibt, angeordnet. Üblich werden 1024 bis 32768 Schritte pro Motorumdrehung geliefert. Bei geeigneter Gewindesteigung läßt sich eine Wegänderung von 1 mm signalisieren; die ist eine Größenordnung kleiner als die Ausdehnung einer Schweißstelle dünner Bleche.

Eine Regelung auf eine konstante Schweißzangen-Schließstellung, also eine geregelte "Verriegelung" der Zange, geschieht in wenigen Mikrosekunden, sobald ein Wegimpuls festgestellt wurde. Da der Signalverlauf an dem Schließantrieb bei jeder Schweißung, solange keine Störungen auftreten, an jeweils den entsprechenden Schweißstellen gleicher Werkstücke zueinander sehr ähnlich ist, wird vorteilhaft eine Speicherung eines optimalen zeitlichen Stromverlaufes vorgenommen und bei einem späteren Schweißvorgang als Referenzstromverlauf genutzt, was die Reglertätigkeit auf den Ausgleich geringer Differenzen zum Referenzverlauf beschränkt und somit die Regelgüte steigert. Der Regler hat somit nicht nur je nach Vorgabe ein übliches PID-Verhalten sondern eine Lernfähigkeit.

Die Signalverarbeitung des Drehgebersignals mit der davon abhängigen Stellsignalerzeugung geschieht bevorzugt in einem Mikroprozessor, der aus dem summierten Drehgebersignal das Wegsignal erzeugt und durch geeignete Filterung der differentiellen Wegsignale, d. h. der Drehgebersignale, und eine laufende Grenzwertüberwachung einen quasi Stillstand des Antriebes oder eine vorgegebene Steigung oder einen vorgegebenen Abfall des Wegsignales durch die Beobachtung der Folgegeschwindigkeit der Drehgebersignale also der Differentiellen Signale mit einer Grenzwertüberwachung das Annähern, Überschreiten und/oder Erreichen eines Maximums ermittelt werden.

Die Filterparameter und die vorzugebenden Grenzwerte, Steigungsoder Abfallsteilheiten lassen sich durch eine Sollwertvorgabe z. B. per Tastatureingabe, bereitstellen und ggf. variieren, so daß die Vorrichtung leicht an unterschiedlichen Zangengeometrien und -Auslegungen und an Abnutzungserscheinungen sowie Bauteil- oder Werkstoffänderungen, insbesondere der Elektroden und Schweißobjekte, angepaßt werden kann.

Der Schweißstrom kann von einem Netztransformator mit einer Phasenanschnittsteuerung geliefert werden. Bekanntlich erlöscht der Stromfluß in den einzelnen Phasen jeweils im Nulldurchgang. Demgemäß werden jeweils für eine Energiezufuhrsteuerung der Phasenwinkel und die Anzahl der Halbwellen vorgegeben. Wenn die Abschaltung aufgrund des Ereignisses, des Maximumdurchlaufes der Schweißstellenausdehnung erfolgt, wird eine bereits gezündete Phase noch bis zu Ende Strom liefern. Demgemäß ist es zweckmäßig früh genug abzuschalten, daß die restliche Phase nicht zu einem Schweißmaterialaustritt führt.

Eine Messung der Anstieggeschwindigkeit der Ausdehnung der Schweißstelle bietet die Möglichkeit, frühzeitig eine Maximalstrombegrenzung vorzunehmen, wenn der Stromanstieg einen vorgegebenen Normalwert übersteigt. Umgekehrt wird die Steilheitsauswertung des Stromanstiegs bei einer Geschwindigkeit, die unter einer Norm liegt zu einer Erhöhung des Maximalstromes genutzt. Der Maximalstrom wird durch die Wahl des Phasenanschnittwinkels bestimmt. Selbstverständlich lassen sich auch Mittelfrequenz-Stromversorgungen vorteilhaft einsetzen, bei denen perse eine sehr exakte Abschaltung gegeben ist.

Um eine sehr schnelle Regelung zu verwirklichen, ist es vorteilhaft, die zeitlichen Abstände der Drehgebersignale gleicher Richtung zu messen, wobei sich unmittelbar die Änderungsgeschwindigkeit des Weges durch Inversion der Abstandswerte ergibt.

Auch die Stromsignale lassen sich von einem signalverfolgenden Analog-Digitalwandler durch dessen Zählsignale die dessen Vergleicher gewöhnlich an einen Digitalzähler liefert, repräsentieren, und deren zeitlicher Abstand ist entsprechend invertiert ein Maß für die Steigung, bzw. bei Signalen umgekehrter Zählrichtung für das Abfallen, des Stromes.

Die Wiederstandspunktschweißung wird, insbesondere im Automobilbau, zum Verbinden von Blechen je einer Dicke von 0,5 bis 3,5 mm eingesetzt. Die Schweißelektroden pressen diese Bleche im Schweißbereich zusammen, so daß drei Stromübergangsbereiche hintereinandergeschaltet sind, wovon zwei die Berührungsflächen der gekühlten Elektroden mit dem angrenzenden Blech sind und einer von Blech zu Blech besteht. Für eine gute Schweißung soll der Widerstand von Blech zu Blech möglichst groß im Vergleich zu den Widerständen an den Elektroden-Aufsatzflächen sein, damit die Elektroden mit der Oberfläche, insbesondere einer galvanischen Schutzschicht, der Bleche nicht anschmelzen und anlegieren und andererseits zwischen den Blechen sich ein linsenförmiger Schmelzbereich ausbildet.
Der Schmelzbereich soll die Bleche weitgehend durchsetzen aber nicht oberflächlich neben der Elektrode oder seitlich zwischen den Blechen aufbrechen, damit keine Materialspritzer austreten und eine fast durchgehende volle Verbindung nach dem Abkühlen der Schweißstelle besteht.

Die Vermeidung von Funken und Spritzen hat auch den großen Vorteil, daß keine Verschmutzungen an den Schweißobjekten und - geräten entstehen und Reinigung-, Wartungs- und Nacharbeitszeit eingespart werden sowie Spritzschutzvorrichtungen an den Anlagen entbehrlich sind.

Insbesondere die modernen hochlegierten Stahlbleche neigen zum Spritzen, da deren Material sich schlagartig stark verflüssigt.

Zu den auf Qualität der Schweißungen gerichteten Forderung kommt das Erfordernis einer lückenlosen Überwachung und Dokumentation aller Schweißpunkte bezüglich ihrer Qualität.

Außerdem ist es wichtig, die Schweißzykluszeit so kurz wie möglich zu halten ohne an Qualität einzubüßen.

Das Vorhandensein aller für eine qualitativ hochwertige Schweißung erforderlichen Bedingungen wird in einer Weiterbildung der Erfindung aus dem thermischen Verformungsverhalten der jeweiligen Schweißstelle abgeleitet, und Abweichungen davon, die festgestellt werden, dienen der Optimierung der Vorgaben unter Berücksichtigung kurzer Schweißperioden. Auf diese Weise werden mehrere Probenschweißungen mit einer gegebenen Blechart und -dicke und einer bestimmten Elektrodenausbildung genutzt, um die Bestromungshöhe, -dauer und deren gesamten zeitlichen Verlauf so festzulegen, daß bei möglichst kurzer Taktzeit noch keine Spritzer entstehen.

Es hat sich gezeigt, daß übliche Bleche einer Dicke von je 0,5 mm bis zu je 3,5 mm ein einheitliches charakteristisches Ausdehnungsverhalten der Schweißstelle zeigen, und daß der Schmelzvorgang und ein beginnender Durchbruch aus dem Verlauf ersichtlich sind. Der Schmelzvorgang erzeugt eine zunehmende Ausdehnung an der Schweißstelle, die um so größer ist, je dicker die Bleche sind. Kommt die flüssige Schweißlinse bis nahe an die Oberfläche der Bleche, so wird diese durch den anhaltenden Druck der Schweißzange leicht eingedrückt; die Ausdehnung überschreitet also ein Maximum. Diesen Effekt ausnutzend wird die Bestromung je nach der Art der Bleche beim Nachlassen der Ausdehnungsänderung etwas vor dem Maximum oder direkt wenn dieses auftritt oder auch etwas verzögert abgeschaltet und ein Halten des Elektrodenandruckes für eine bestimmte Haltezeit eingeleitet, in der die Rekristallisierung der Schweißlinse erfolgt. Das Erreichen des Maximums garantiert die geforderte Tiefenausdehnung der Schweißlinse und somit des Verbindungsbereiches und dessen Verankerung im Gefüge.

Bei aufeinanderfolgenden Schweißungen wird die Schweißstromstärke jeweils schrittweise erhöht, so daß die resultierende Zeit bis zum Auftreten des Maximums entsprechend kürzer ist. Die höchste Stromstärke und die kürzeste Schweißzeit sind jeweils dann über- bzw. unterschritten, wenn in der Nähe des Maximums, i. a. kurz danach, ein steiler Einbruch der Schweißstelle erfolgt, der das Austreten des flüssigen Materials anzeigt. Wird demgemäß der Schweißstrom ca. 20% unter den kritischen Wert, bei dem der Durchbruch auftrat, künftig vorgegeben, so ergeben sich die optimalen Verhältnisse für die entsprechende Blechart und - dicke.

Die -standardisierte Beobachtung des Auftretens des Ausdehnungsmaximums und ggfls. eines Einbruches erbringen die jeweils optimale Schweißung und eine zuverlässige Qualitätsbeurteilung der Schweißung. Abweichungen von dem Ausdehnungsverlauf und eine merkliche Änderung der Zeitdauer der Bestromung sind Anzeichen für i. a. nachteilige Einflüsse an der Anordnung. Die können Änderungen an den Blechen, insbesondere an deren Oberflächen oder deren Beschichtungen, oder den Kontaktflächen der Schweißelektroden sein. Diese sollten konvex mit einer Abplattung von wenigen Millimetern Durchmessern ausgebildet sein, so daß der Schweißstrom auf einen definierten engen Bereich im Zentrum der Linse konzentriert fließt.
Die Abplattungen der Elektrodenspitzen dringen durch die hohe Zangenkraft etwas in die Blechoberfläche ein und kühlen diese einschließlich der galvanischen Schutzschicht so weit ab, daß dort kein Schmelzen stattfindet, wodurch die Schutzschicht erhalten bleibt und auch kein Oberflächenmaterial herausspritzt, das zu Verschmutzungen führen würde.

Der hohe Druck der Elektroden preßt die Bleche, falls sie 0,5 bis 1,5 mm dick sind, in einem so kleinen Bereich zusammen, daß eine hohe Stromdichte und damit eine zunehmend wachsende Schweißlinse auftreten.

Bei größeren Blechdicken wird häufig eine so große Unebenheit beobachtet, daß der übliche Anpreßdruck keinen zentralen kleinflächigen Kontakt erbringt. Dies kann zu einer erheblichen Verlängerung der Schweißzeit führen; das zu beobachtende Maximum der Ausdehnung tritt später als erwartet auf. Diese Information wird vorteilhaft genutzt, indem dem eigentlichen Schweißvorgang ein Aufheiz- und Glättungsvorgang vorgeordnet wird, indem mit wesentlich geringerer Stromstärke, z. B. der halben, als beim optimalen Schweißen anschließend benötigt wird, und mit wesentlich kürzeren Bestromungszeiten im Vergleich zur Schweißzeit Erwärmungsimpulse in den Blechen erzeugt werden, die dazu führen, daß sich das Blech entspannt und sich dadurch im Bereich der Elektroden zusammensetzt. Diese Setzbewegung wird ebenfalls durch die Beobachtung der Signale am Winkelgeber des Zangenantriebs überwacht. Wenn praktisch keine Setzbewegung infolge eines Heizstromimpulses mehr auftritt, wird mit der Schweißung mit der vollen vorgegebenen Stromstärke begonnen.

Es hat sich gezeigt, daß es zweckmäßig ist, wenn die vermehrt zum Einsatz kommenden hochlegierten Stahlbleche, die zum Durchbrechen der flüssigen Schweißlinse neigen, anstatt mit einem Rechteck-Schweißstromimpuls mit einem gesteuerten Stromanstieg, also einem Trapez-Schweißstromimpuls oder einem entsprechenden Stufenanstieg, beaufschlagt werden. Auch die günstigste Steilheit des Schweißstromanstieges läßt sich durch Probeschweißungen ermitteln, bei denen das Auftreten des unerlaubten schnellen Einbruchs der Schweißstelle als Kriterium für eine schrittweise Verringerung des Stromanstieges genutzt wird, bis Durchbrüche mit Sicherheit auszuschließen sind.

Treten im laufenden Betrieb zu lange Setzzeiten oder unerwartete Durchbrüche auf, so wird dem durch eine weitere Änderung der genannten Parameter sofort entgegengewirkt. Darüberhinaus werden die Störungen dokumentiert und angezeigt, so daß eine Ursacherforschung und -beseitigung vorgenommen werden kann.

Es ist bekannt, die Anpreßkraft der Elektroden geeignet zu den Blechdicken und der Elektrodenausbildung zu wählen. Wenn Störungen im Antriebssystem auftreten, so daß die durch die Motorbestromung vorgegebene Andruckkraft an den Elektroden nicht voll wirksam wird, so wirkt sich auch das merklich am Winkelmeßsignal aus, weil das Setzen verzögert stattfindet und das Eindrücken nach dem Überschreiten des Maximums der Schweißstellenausdehnung verringert ist. Letzteres tritt auch in Verbindung mit einer größeren Schweißenergieaufnahme bei einer zunehmenden Elektrodenabplattung auf.

Vorteilhafte Ausgestaltungen sind schematisch in Fig. 1 - 3 dargestellt.
Fig. 1 zeigt ein Funktionsschema der Vorrichtung;
Fig. 2 zeigt beispielhafte zeitliche Signalverläufe;
Fig. 3 zeigt eine Widerstandsschweißzone vergrößert im Schnitt.

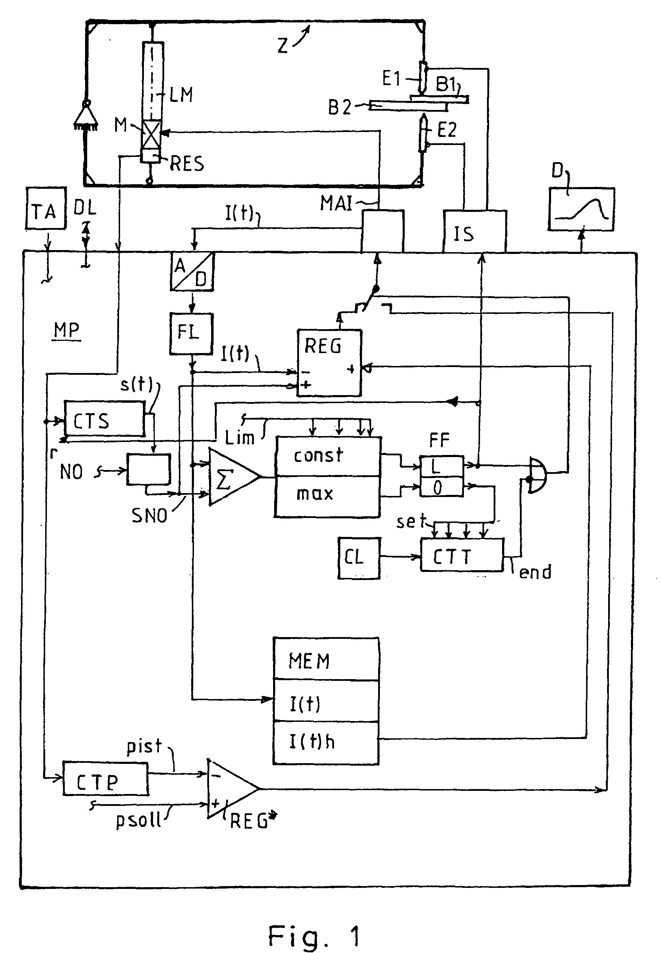

Fig. 1 zeigt eine Schweißzange (Z) mit den beiden Schweißelektroden (E1, E2) zwischen denen das Schweißobjekt, die beiden Bleche (B1, B2), zusammengepreßt gehalten sind. Den Anpreßdruck erzeugt der Lineartrieb (LM), der bevorzugt aus einer Kugelumlaufspindel mit einem Antriebsmotor (M) besteht, der mit einem Motoransteuerstrom (MAI) beaufschlagt wird und dessen Drehbewegungen jeweils von einem Drehgeber (RES) durch winkelgemäße Vor- und Rückwärtsimpulse bzw. phasenversetzte Impulszüge signalisiert wird, aus denen Richtungsimpulse ableitbar sind.

Die Schweißelektroden (E1, E2) sind mit einem Schweißstromgenerator (IS) verbunden, der ein- aussteuerbar ist, aber auch in Stromstufen gesteuert sein kann, falls besondere Verhältnisse am Schweißobjekt dies erfordern.

Die Ansteuerung des Motors (M) und des Schweißstromgenerators (IS) geschieht über eine Steuervorrichtung, die im wesentlichen aus einem Mikroprozessor (MP) besteht. Dieser erhält Einstellparameter und Grenzwerte (Lim) über eine Tastatur (TA) oder ein ähnliches Dateneingangsmedium und liefert Prozeßdaten, Zustandsund Alarmmeldungen etc. an ein Bildschirmgerät (D) in bekannter Weise in nummerischer oder bildlicher Form, z. B. als Weg- oder Stromkurve. Über eine Datenleitung (DL) ist der Prozessor (MP) bevorzugt mit einem Zentralprozessor verbunden, wenn diese Schweißstation Teil einer Fertigungsstraße ist.

Die Signale des Drehgebers (RES) werden zum einen in einem Positionszähler (CTP) summiert, dessen Positionsangabe zum Schließen und Öffnen als Istposition (pist) einem Regler (REG*) zugeführt wird, dem als Soll-Position (psoll) eine externe Vorgabe geliefert wird, soweit nicht andere Steuerkriterien Vorrang haben.

Die Drehgebersignale (RES) werden außerdem differentiell, z. B. durch Messung des Abstands gleichsinniger Impulse, auf einen quasi Stillstand (const) hin und auf das Überschreiten eines Maximums (max) das sich aus einer Richtungsumkehr der Drehgeberimpulse ergibt, überprüft. Diese Überprüfungen (const, max) gehen mit einer Filterung, Mittelung odgl. einher damit nur wirklich relevante Zustände zur weiteren Steuerung genutzt werden. Die Einstellparameter (Lim) werden dazu extern vorgegeben.

Ist bei einer Schließbestromung des Motors (M) der Konstantzustand (const) ermittelt, wird dieser in einem Zustandsspeicher (FF), der als Flip-Flop symbolisiert ist, gespeichert, der den Schweißstromgenerator (IS) einschaltet. Gleichzeitig wird ein Wegzähler (CTS) zurückgesetzt, der die Drehgebersignale (RES) aufzählt, so daß der Zählerinhalt (s(t)) laufend die Distanzänderung der Elektroden (E1, E2) nach dem Einschalten des Schweißstromes (IS) signalisiert, die z. B. auch auf dem Display (D) dargestellt werden kann. Sobald der Zustand des Maximumdurchlaufes (max) oder je nach Vorgabe einer Annäherung oder ein Verlassen dessen erkannt ist, wird der Konstantzustandsmerker (FF) gelöscht, wodurch der Schweißstromgenerator (IS) abgeschaltet wird und ein Zeitglied (CTT) auf eine Vorgabehaltezeit gesetzt (set) wird, mit dessen Ende (end) die Öffnensteuerung des Zangenantriebs freigegeben wird. Das Zeitglied (CTT) kann ein voreinstellbarer Zähler sein, der mit den Signalen einer Uhr (CL) zählend beaufschlagt wird.

In einer bevorzugten Ausführung wird der Motorstrom (MAI) abhängig von der Differenz der Positionsangaben (psoll, pist) gesteuert und, nachdem der Konstantzustand (const) gemeldet wird, wird ein bestimmter Strom vorgegeben. Es entsteht demgemäß eine bestimmte Kraft zwischen den Elektroden, und deren Abstand folgt dem Ausdehnungs- und späteren Schrumpfzustand des Objektes, somit sind in dieser Betriebsart die neuen Auswertemittel der Drehgebersignale (RES) und die Verwendung von deren Signalen an einer elektrisch gesteuerten Schweißzange vorteilhaft genutzt. Es sind keine weiteren Meßmittel neben dem zur Wegsteuerung stets vorhandenen Drehgeber zusätzlich erforderlich. Die gewonnenen elektrischen Signale werden nach entsprechender Auswertung auch zum ein- und Ausschalten oder zur Stromsteuerung des Schweißstromes genutzt.

In einer weiteren Ausführung ist außerdem eine Motorstrommessvorrichtung (IM) vorgesehen, die auch bei konventionellen Stelltrieben ähnlicher Art zum Einsatz kommt, wenn der Motorstrom nicht nur gesteuert sondern in einem untergeordneten Regler geregelt wird.

Das Strommeßsignal (IM) wird dem Prozessor (MP) zugeführt, in einem Analogdigitalwandler (A/D) gewandelt und in einem Filter (FI) gefiltert. Mit dieser Ausstattung kann bei geeignet großer Antriebskraft in der Schweißzeit und in der Haltezeit danach jeweils als Regelkriterium der Inhalt des Wegzählers (CTS) dienen, wobei der Sollweg zu Null gesetzt ist. Dies führt dazu, daß bei steigender Expansionskraft der Schweißstellen ein dieser entgegenwirkender steigender Motorstrom durch den Regler geliefert wird. Da der Elektrodenweg durch das erhöhte Zusammenpressen der Elektroden annähernd Null ist, ist die Ermittlung eines Weg-Maximums kaum möglich, und stattdessen wird das Strommaximum ermittelt. Hierzu wird das gewandelte und gefilterte Stromverlaufsignal (I(t)) dem Maximumdetektor (max) zugeführt. In der Darstellung sind die zeitlichen Strom- und Wegsignalverläufe (I(t), s(t)) nach passender Normierung (NO), z. B. des Wegsignals (SNO) summiert und so dem Maximumdetektor (max) und dem Konstanzdetektor (const) zugeführt. Beide Signalverläufe werden also zugleich berücksichtigt, und das Ergebnis ist nicht vom Stromverlauf allein abhängig.

Dies ermöglicht eine Verbesserung des Regelverhaltens bei bekanntem Verhalten der Schweißstellen und einem dazu gewünschten Stromverlauf. Dieser wird in den Antriebsstromregler als eine Sollwertkomponente eingespeist der zu der Weg-zu-Null Komponente hinzutritt. Ein geeigneter Vorgabe-Stromverlauf (I(t)h) wird vorteilhaft aus der Speicherung von historischen Stromverläufen (I(t)), also bei vorherigen Schweißvorgängen, in einem Speicher (MEM) abgeleitet. Wird dieser Vorgang der Speicherung und späteren Vorgabe des Stromverlaufes oft wiederholt, erfolgt eine sehr schnelle Regelung mit abnehmenden Abweichungen von der Zielvorgabe, nämlicher eine "starren" Schweißzange zu simulieren.

Die Ausgestaltung der einzelnen durch Hardwaresymbolik veranschaulichten Funktionskomponenten ist vorzugsweise in Form eines Steuerprogrammes mit Unterprogrammkomponenten vorgenommen. Auf diese Weise sind Parameter leicht zu ändern und die Auswirkungen solcher Änderungen im Steuerungsablauf und in der Reaktion der Zangenmechanik und des Objektes zu überprüfen, indem die Meßgrößen oder abgeleitete Größen überwacht und ausgegeben werden. Die Zählvorgänge können in bekannter Weise mit einer Interruptsteuerung durchgeführt werden, der z. B. die Drehgebersignale (RES) oder vom Analog/Digitalwandler die Increment/Decrementsignale zugeführt werden.

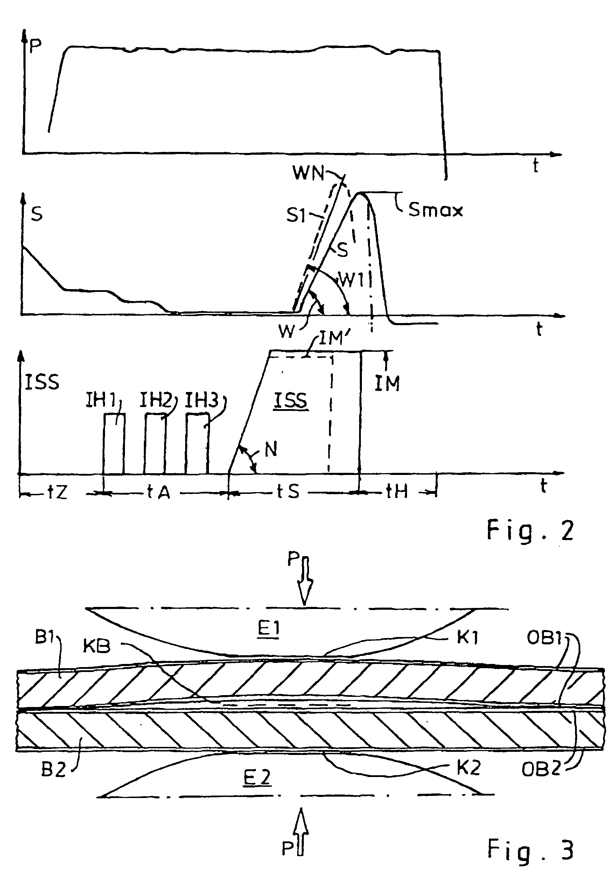

Fig. 2 zeigt die zeitlichen Verläufe der Wirk- und Reaktionsgrößen einer Widerstandsschweißung, wobei die Sonderfälle berücksichtigt sind, daß dicke Bleche vor dem Schweißen entspannt und gesetzt werden und aufgrund einer kritischen Legierung des Materials und/oder einer empfindlichen Beschichtung ein langsamer Schweißstromanstieg vorgenommen wird.

Der Zangenstrom ISS wird vorab in drei Aufheizimpulsen IH1 -IH3 zeitlich beabstandet appliziert, und danach wird der etwa doppelt so hohe Schweißstromimpuls IS für eine längere Zeit eingespeist.

Während der gesamten Schweißperiode, die im wesentlichen aus einer Zangenschließzeit tZ, der aus mehreren Phasen bestehenden Aufheiz- und Setzzeit tA, der eigentlichen Schweißzeit tS und der Haltezeit tH besteht, wird die Zangenkraft P wird durch den vorgegebenen Motorstrom im wesentlichen konstant gehalten.

Die Reaktion des Elektrodenabstandes S der durch die Zangenkraft P und die Stöme ISS auf die Schweißstelle beeinflußt wird, zeigt der dritte dargestellte Kurvenverlauf.

In der Schließzeit tZ werden die Bleche zwischen den Elektroden zusammengepreßt, bis der Elektrodenabstand S konstant bleibt bzw. der Winkelgeber zur Ruhe kommt und die Motorkraft voll in die Anpreßkraft P umgesetzt wird.

In der Aufheizzeit tA werden nacheinander drei Aufheizstromimpulse tH1 - tH3 mittlerer Größe appliziert. Durch das Aufheizen entspannen sich die Bleche nach und nach, wodurch ein Setzen der Elektroden mit den Blechen in entsprechenden Stufen eintritt, wie der gestufte Verlauf des Elektrodenabstandes S zeigt. Bereits die ersten beiden Aufheizstromimpulse IH1, IH2 reichten für ein vollständiges Setzen aus; der dritte Reserveheizimpuls bringt kein weiteres Setzen.

In der Schweißzeit tS steigt der Schweißstrom mit einer Neigung N auf seinen jeweils vorgegebenen Maximalwert IM an. Der sachte Stromanstieg dient zum sachten Einsetzen der Elektroden in eine Oberflächenbeschichtung, z. B. Zink, mit niedrigem Schmelzpunkt und zur Verhinderung eines Ausbrechens der Schmelze aus der Linse, insbesondere bei einem hochlegierten Blechmaterial. Während der Schweißbestromung vergrößert sich die Schweißstelle durch thermische. Ausdehnung der Bleche und der darin eingeschlossenen entstehenden Schmelze, was den Elektrodenabstand S nach und nach vergrößert bis sich die Abstandszunahme verlangsamt und ein Maximum Smax erreicht ist.

Im Beispiel wird bereits bei nachlassender Ausdehnungsgeschwindigkeit vor Erreichen von deren Maximum der Schweißstrom IS abgeschaltet, und durch die anhaltende Andruchkraft P während der vorgegebenen Haltezeit tH sinkt die Schweißstelle wieder ein, und der Elektrodenabstand S stabilisiert sich auf einem Endniveau SE, das etwas unter dem Ausgangsniveau liegt.

Strichpunktiert ist ein steiler Abstandsabfall dargestellt, der immer dann auftritt, wenn Schmelze austritt und herausspritzt. Durch den Materialverlust sinkt dann die Elektrode aufgrund der anhaltenden Andruckkraft schnell tief in die Schweißstelle ein. Tritt ein solcher abrupter Abfall des Elektrodenabstandes S auf, werden die Schweißparameter der nächsten Schweißung vorbeugend geändert, z. B. die Neigung N des Stromanstieges verringert und/oder der maximale Schweißstrom IM verringert.
Am Ende der Haltezeit tH wird die Schweißzange geöffnet und an einen anderen Schweißpunkt verbracht.

Weiterhin zeigt Fig. 2 gestrichelt einen zeitlichen Verlauf der Dehnung S1 von hochfestem Stahl im Vergleich zu der Spaltänderung S von gewöhnlichem Stahl bei ansonsten gleichen Verhältnissen. Der hochfeste Stahl dehnt sich wesentlich schneller aus, und die Abschaltung des Schweißstromes erfolgt demgemäß wesentlich früher. Diesen Effekt nutzend wird jeweils die zeitliche Veränderung der Spaltweite, die als Winkel W, W1, dargestellt ist, zu Beginn der gemessenen Ausdehnung der Schweißstelle ermittelt und daraus festgelegt, wann die Stromabschaltung in Bezug auf das auftretende Maximum der Dehnung erfolgen soll oder wie Steil der Stromanstieg künftig vorgegeben wird.
Diese Methode enthebt bei der automatischen Ermittlung der optimalen Parameter es erst zu einem Ausbruch der Schmelze kommen zu lassen.
Je steiler der Anstieg der Spaltweite S, S1 um so eher erfolgt die Stromabschaltung in bezug auf das Maximum der Spaltweite S, S1.

Vorteilhaft wird in einer weiteren Ausführung die Geschwindigkeit der Schweißstellenausdehnung, die durch die Steigungswinkel W, W1 in der Figur repräsentiert ist, gemessen und als Steuer kriterium für die Wahl der Stromanstiegsgeschwindigkeit und insbesondere für die Maximalstromstärke IM unmittelbar genutzt. Ist der Anstiegswinkel W1 größer als ein Normwinkel WN, wie im Beispiel, so wird der Maximalstrom IM verringert und umgekehrt wird bei zu langsamer Ausdehnung der Schweißstelle der Stromanstieg N und/oder der Maximalstrom IM erhöht. Somit findet ein unmittelbare Bestromungsregelung statt. Durch diese werden nicht nur Unterschiede in der Materialart sondern auch andere Änderungen am Schweißobjekt oder der Schweißvorrichtung, z. B. Änderungen wie eine zunehmende Abplattung, an den Schweißelektroden ausgeglichen, indem der Maximalstrom zunimmt und die Schweißzeit nicht unerwünscht verlängert wird. Diese Art der Schweißstromregelung hat eine eigene erfinderische Qualität, und sie läßt sich nicht nur mittels der hier beschriebenen Winkelgebersignale des Motors sondern auch mit Meßsignalen eines bekannten Kraftmessers an der Zange oder eines anderen Dehnungsoder Abstandsmessers vornehmen.

Fig. 3 zeigt einen vergrößerten Axialschnitt durch eine Schweißstelle am Ende der Schließzeit der Elektroden E1, E2. Es sind relativ dicke Bleche B1, B2 dargestellt, deren Kontaktbereich KB noch nicht geschlossen ist, da die Bleche B1, B2 dort leicht gebeult sind, wie überhöht dargestellt ist.

Die Elektrodenspitzen E1, E2 sind etwa kugelförmig gerundet und in den relativ kleinen Kontaktbereichen K1, K2 zu den Blechen B1, B2 abgeplattet. Die abgeplatteten Kontaktbereiche K1, K2 sind leicht in die Oberflächenbeschichtungen OB1, OB2 eingedrückt, so daß dort jeweils ein relativ geringer Übergangswiderstand entsteht und praktisch kein Material aufschmilzt und herausspritzt oder die Elektroden auflegiert, was zu deren Erweichung und baldigen Verformung führen würde, so daß danach eine Verschlechterung der Übergangs-und Zusammenpreßverhältnisse die Folge wäre bzw. eine Nacharbeit der Elektroden erfolgen müßte.

## Patentansprüche

1. Punktschweißvorrichtung mit einer Schweißzange (Z), deren Schweißelektroden (E1, E2) mit einem steuerbaren Schweißstromgenerator (IS) verbunden sind, und die durch einen elektromotorischen Antrieb (M), an dem ein Positionssensor angeordnet ist, mit dessen Signalen von einer Steuervorrichtung (MP) die Schweißzange (Z) Vorgaben (psoll) gemäß auf und zu zu steuern ist, und wobei im geschlossenen Zustand der Schweißzange (Z) diese zwischen den Schweißelektroden (E1, E2) Schweißobjekte (B1, B2) durch einen vorgegebenen Motorstrom (MAI) zusammengepreßt hält, wobei der Schweißstromgenerator (IS) von der Steuervorrichtung (MP) zeitweilig aktiviert ist und wobei der Positionssensor ein Drehsignalgeber, Resolver (RES) ist und die Steuervorrichtung (MP) Überwachungsvorrichtungen (const, max) umfaßt, denen die Drehgebersignale laufend zugeführt werden, und wobei sobald diese Überwachungsvorrichtung (const) nach einer Zu-Steuerung der Schweißzange (Z) an den Drehgebersignalen einen Quasi-Stillstand erkennt, ein entsprechender erster Zustand als der geschlossene Zustand der Schweißzange (Z) gespeichert wird und der Schweißstromgenerator (IS) aktiviert wird und danach ein zeitlicher Verlauf einer Schweißelektrodendistanz (CTS) aus den Resolversignalen (RES) ermittelt wird, abhängig von dem der Motorstrom (MAI) und/oder der Schweißstrom des Schweißstromgenerators (IS) verändert vorgegeben werden, so daß der Verlauf der Schweißelektrodendistanz (CTS) einem vorgespeicherten Verlauf einer optimalen Schweißung nahe kommt,
**dadurch gekennzeichnet, daß** im geschlossenen Zustand der Motorstrom (MAI) derart regelbar ist, daß eine Schweißelektrodendistanz (CTS), die durch eine Summierung der Drehgebersignale (RES) laufend ermittelt wird, nahezu konstant oder einem vorgegebenen zeitlichen Verlauf gemäß gehalten ist.

2. Punktschweißvorrichtung nach Anspruch 1, **dadurch gekennzeichnet, daß** ein Motorstrom-Meßsignal (I(t)) der Überwachungsvorrichtung (const) laufend zugeführt ist und dort analogdigital gewandelt und gefiltert wird und zusammen mit dem jeweiligen Schweißelektrodendistanzwert (CTS) normiert summiert der Überwachungsvorrichtung (const, max) zugeführt ist.

3. Punktschweißvorrichtung nach Anspruch 2, **dadurch gekennzeichnet, daß** der Verlauf des aufbereiteten Motorstrom-Meßsignals (I(t)) in einem Speicher (MEM) abgespeichert wird und für spätere Schweißvorgänge jeweils als eine Motorstromsollwertkomponente (I(t)h) bereitgestellt ist, dem die normierte Schweißelektrodendistanz (SNO) als weitere Sollwertkomponente hinzugefügt wird und der so gebildete Soll-Stromwert über einen Motorstromregler den Motorstrom (MAI) liefert.

4. Punktschweißvorrichtung nach einem der vorstehenden Ansprüche, **dadurch gekennzeichnet, daß** der Schweißstromgenerator (IS) derart angesteuert wird, daß der abgegebene Schweißstrom (IS) zeitlich verzögert bis auf einen vorgegebenen Maximalstrom (IM) ansteigt.

5. Punktschweißvorrichtung nach einem der vorstehenden Ansprüche, **dadurch gekennzeichnet, daß** die Drehgebersignale (RES) und/oder das Motorstrom-Meßsignal (I(t)) auf eine abrupte Änderung nahe vor oder nach dem Ende der Schweißstromzuführung überwacht wird und bei deren Auftreten eine Störungsmeldung abgesetzt wird und eine stärkere Verzögerung des Schweißstromanstieges und/oder eine stufenweise Verringerung des Maximalstromes (IM) für einen folgenden Schweißzyklus vorgegeben wird.

6. Punktschweißvorrichtung nach einem der vorstehenden Ansprüche, **dadurch gekennzeichnet, daß** bei Durchführung einer Parameteradaptionsserie von Schweißungen der Maximalstrom (IM) schrittweise pro Schweißung erhöht wird bis nahe vor oder nach dem Ende der Schweißstromzuführung eine abrupte Änderung der Drehgebersignale (RES) oder des Motorstrom-Meßsignals (I(t)) eine Störung signalisiert, worauf der Maximalstrom (IM) für die folgenden Schweißungen herabgesetzt vorgegeben wird.

7. Punkschweißvorrichtung nach einem der vorstehenden Ansprüche, **dadurch gekennzeichnet, daß** nach dem Schließen der Schweißzange (Z) der Schweißstromgenerator (IS) mindestens einen Heizstromimpuls (tH1 tH3) liefert, der wesentlich kürzer und/oder niedriger als der Schweißstromimpuls (ISS) ist, wobei eine Verringerung des Schweißelektrodenabstandes (S) mittels einer Beobachtung der Drehgebersignale (RES) und/oder des Motorstrom-Meßsignales (I(t)) kontrolliert wird und, wenn der Schweißstromelektrodenabstand (S) sich um weniger als eine vorgegebenes Maß verringert, kein weiterer Heizstromimpuls (tH2; tH3), jedoch der Schweißstrom (ISS) vom Schweißstromgenerator (IS) abgegeben wird.

8. Punktschweißvorrichtung nach einem der vorstehenden Ansprüche, **dadurch gekennzeichnet, daß** in der Schweißzeit (tS) eine Änderungsgeschwindigkeit (W, W1) eines Schweißelektrodenabstandes (S, S1 mittelbar oder unmittelbar gemessen wird und abhängig von einer Über- oder Unterschreitung einer vorgegebenen Änderungsgeschwindigkeit (WN) die Abschaltung des Schweißstroines (ISS). bezüglich eines Auftretens eines Maximums (Smax) eines Schweißelektrodenabstandes (S, S1 früher bzw. später erfolgt und/oder so für die nächste Schweißung vorgegeben wird.

9. Punktschweißvorrichtung nach einem der vorstehenden Ansprüche, **dadurch gekennzeichnet, daß** in der Schweißzeit (tS) eine Änderungsgeschwindigkeit (W, W1 eines Schweißelektrodenabstandes (S, S1) mittelbar oder unmittelbar gemessen wird und abhängig von einer Über- oder Unterschreitung einer vorgegebenen Änderungsgeschwindigkeit (WN) der Über- oder Unterschreitung entgegenwirkend eine Steilheit (N) des Stromanstieges und/oder ein Maximalstrom (IM) verringert bzw. erhöht dem Schweißstromgenerator (IS) vorgegeben wird.

## Claims

1. A spot welding apparatus comprising an electrode holder (Z) of which the welding electrodes (E1, E2) are connected to a controllable welding current generator (IS) and which is to be actuated open and closed by an electric motor drive (M) on which a position sensor is disposed, with the signals of which the electrode holder (Z) is to be actuated open and closed in accordance with predefined settings (psoll) by a control device (MP) and wherein in the closed condition of the electrode holder (Z) it holds objects (B1, B2) to be welded clamped together between the welding electrodes (E1, E2) by a predetermined motor current (MAI), wherein the welding current generator (IS) is activated at times by the control device (MP) and wherein the position sensor is a rotary signal generator, resolver (RES), and the control device (MP) includes monitoring devices (const, max) to which the rotary generator signals are continuously fed and wherein as soon as said monitoring device (const) after closing actuation of the electrode holder (Z) detects a quasi-stoppage at the rotary generator signals a corresponding first condition is stored as the closed condition of the electrode holder (Z) and the welding current generator (IS) is activated and thereafter a configuration in respect of time of a welding electrode distance (CTS) is ascertained from the resolver signals (RES), in dependence on which the motor current (MAI) and/or the welding current of the welding current generator (IS) are predetermined in modified form so that the configuration of the welding electrode distance (CTS) comes close to a prestored configuration of optimum welding,
**characterised in that** in the closed condition the motor current (MAI) can be regulated in such a way that a welding electrode distance (CTS) which is continuously ascertained by summing of the rotary generator signals (RES) is kept almost constant or in accordance with a predetermined configuration in respect of time.

2. A spot welding apparatus according to claim 1 **characterised in that** a motor current measurement signal (I(t)) is continuously fed to the monitoring device (const) and there subjected to analog-digital conversion and filtered and fed to the monitoring device (const, max) summed standardised together with the respective welding electrode distance value (CTS).

3. A spot welding apparatus according to claim 2 **characterised in that** the configuration of the processed motor current measurement signal (I(t)) is stored in a memory (MEM) and furnished for later welding operations in each case as a motor current reference value component (I(t)h) to which the standardised welding electrode distance (SNO) is added as a further reference value component and the reference current value formed **in that** way supplies the motor current (MAI) by way of a motor current regulator.

4. A spot welding apparatus according to one of the preceding claims **characterised in that** the welding current generator (IS) is so actuated that the delivered welding current (IS) increases with a time delay to a predetermined maximum current (IM).

5. A spot welding apparatus according to one of the preceding claims **characterised in that** the rotary generator signals (RES) and/or the motor current measurement signal (I(t)) is monitored for an abrupt change closely before or after the end of the welding current supply and upon the occurrence thereof an error message is issued and a greater delay in the welding current rise and/or a stepwise reduction in the maximum current (IM) is predetermined for a following welding cycle.

6. A spot welding apparatus according to one of the preceding claims **characterised in that** when performing a parameter adaptation series of welding operations the maximum current (IM) is increased stepwise for each welding operation until closely before or after the end of the welding current supply an abrupt change in the rotary generator signals (RES) or the motor current measurement signal (I(t)) signals a fault, whereupon the maximum current (IM) is predetermined lower for the following welding operations.

7. A spot welding apparatus according to one of the preceding claims **characterised in that** after closure of the electrode holder (Z) the welding current generator (IS) supplies at least one heating current pulse (tH1 - tH3) which is substantially shorter and/or lower than the welding current pulse (ISS), wherein a reduction in the welding electrode spacing (S) is monitored by observing the rotary generator signals (RES) and/or the motor current measurement signal (I(t)) and when the welding current electrode spacing (S) is reduced by less than a predetermined amount no further heating current pulse (tH2, tH3) but the welding current (ISS) is delivered by the welding current generator (IS).

8. A spot welding apparatus according to one of the preceding claims **characterised in that** a rate of change (W, W1) of a welding electrode spacing (S, S1) is measured directly or indirectly in the welding time (tS) and in dependence on whether the rate of change exceeds or is below a predetermined rate of change (WN) the welding current (ISS) is switched off earlier or later with respect to the occurrence of a maximum (Smax) of a welding electrode spacing (S, S1) and/or is thus predetermined for the next welding operation.

9. A spot welding apparatus according to one of the preceding claims **characterised in that** a rate of change (W, W1) of a welding electrode spacing (S, S1 is measured directly or indirectly in the welding time (tS) and in dependence on whether the rate of change exceeds or is below a predetermined rate of change (WN) in opposite relationship to the rate of change exceeding or being below the predetermined rate of change a gradient (N) in respect of the rise in current and/or a maximum current (IM) is predetermined at a reduced or increased value for the welding current generator (IS).

## Revendications

1. Dispositif de soudage par points, avec une pince porte-électrodes (Z) dont les électrodes de soudure (E1, E2) sont reliées à une génératrice de courant de soudage réglable (IS) et qui peut être ouverte et fermée, conformément à des consignes (psoll), par un moteur électrique (M) auquel un détecteur de position est associé dont les signaux sont reçus par un dispositif de commande (MP), la pince porte-électrodes (Z), à l'état fermé, maintenant les objets à souder (B1, B2) comprimés entre les électrodes de soudure (E1, E2), par un courant de moteur prédéfini (MAI), la génératrice de courant de soudage (IS) étant activée par intermittence par le dispositif de commande (MP) et le détecteur de position étant un résolveur (RES) et le dispositif de commande (MP) comprenant des dispositifs de contrôle (const, max), auxquels les signaux du résolveur sont conduits continuellement et, dès que ces dispositifs de contrôle (const), après une commande de fermeture de la pince porte-électrodes (Z), détectent un quasi-arrêt au niveau des signaux du résolveur, un premier état adéquat est mémorisé en tant qu'état de fermeture de la pince porte-électrodes (Z) et la génératrice de courant de soudage (IS) est activée, puis une évolution au cours du temps d'une distance des électrodes de soudure (CTS) étant détecté sur la base des signaux du résolveur (RES), évolution au cours du temps en dépendance de laquelle le courant du moteur (MAI) et / ou le courant de soudage de la génératrice de courant de soudage (IS) modifiés de manière prédéfinie de sorte que l'évolution au cours du temps de la distance des électrodes de soudure (CTS) soit proche d'une évolution pré-mémorisée d'une opération de soudage optimale,
**caractérisé en ce qu'**à l'état fermé, le courant du moteur (MAI) peut être régulé de sorte qu'une distance des électrodes de soudure (CTS), continuellement déterminée par la sommation des signaux du résolveur (RES), soit maintenue presque constante ou conforme à une évolution au cours du temps prédéfinie.

2. Dispositif de soudage par points selon la revendication 1,
**caractérisé en ce qu'**un signal de mesure du courant du moteur (I(t)) est continuellement conduit au dispositif de contrôle (const), où il est soumis à une conversion analogique-numérique et filtré et est conduit au dispositif de contrôle (const, max), en commun avec la valeur de la distance des électrodes de soudure (CTS) respective, sommée de manière normalisée.

3. Dispositif de soudage par points selon la revendication 1,
**caractérisé en ce que**
l'évolution des signaux de mesure de courant du moteur (I(t)) actualisés est stockée chaque fois dans une mémoire (MEM) et disponible lors d'opérations de soudage ultérieures en tant que composante de valeur de consigne du courant du moteur (I(t)h) à laquelle la distance standard des électrodes de soudure (SNO) est ajoutée en tant qu'autre composante de valeur de consigne et que la valeur de courant de consigne ainsi formée donne le courant du moteur (MAI) par l'intermédiaire d'un régulateur de courant.

4. Dispositif de soudage par points selon l'une des revendications précédentes,
**caractérisé en ce que** la génératrice de courant de soudage (IS) est excitée de sorte que le courant de soudage (IS) délivré (IS) croisse, avec un retard dans le temps, jusqu'à un courant maximal prédéfini (IM).

5. Dispositif de soudage par points selon l'une des revendications précédentes,
**caractérisé en ce que** les signaux du résolveur (RES) et / ou le signal de mesure du courant du moteur (I(t)) sont contrôlés quant à un changement abrupt, peu avant ou peu après la fin de l'amenée de courant de soudage, et sont ignorés lors de l'apparition d'un message de perturbation et qu'un retard dans le temps plus important de l'augmentation du courant de soudure et / ou une réduction graduée du courant maximal (IM) est prédéfinie pour un cycle de soudage suivant.

6. Dispositif de soudage par points selon l'une des revendications précédentes,
**caractérisé en ce que**, lors de l'exécution d'une série d'adaptation de paramètres de soudage, le courant maximal (IM) est augmenté pas-à-pas, pour chaque soudure, jusqu'à ce que, peu avant ou peu après la fin de l'amenée de courant de soudure, un changement abrupt des signaux du résolveur (RES) ou du signal de mesure du courant du moteur (I(t;) indique une perturbation, ce à la suite de quoi le courant maximal (IM), réduit, est prédéfini pour les soudages suivants.

7. Dispositif de soudage par points selon l'une des revendications précédentes,
**caractérisé en ce qu'**après la fermeture de la pince à électrodes (Z), la génératrice de courant de soudage (IS) délivre au moins une impulsion de courant de chauffage (tH1 à tH3) qui est considérablement plus courte et / ou plus faible que l'impulsion de courant de soudage (ISS), une réduction de la distance des électrodes de soudure (S) étant contrôlée par une observation des signaux du résolveur (RES) et / ou du signal de mesure du courant du moteur (I(t)) et, quand la distance des électrodes de soudure (S) diminue de moins d'une mesure prédéfinie, la génératrice de courant de soudage (IS) délivre le courant de soudage (ISS) mais ne délivre plus aucune autre impulsion de courant de chauffage (tH2, tH3).

8. Dispositif de soudage par points selon l'une des revendications précédentes,
**caractérisé en ce que**, durant le temps de soudage (tS), une vitesse de modificaticn (W, W1) de la distance des électrodes de soudage (S, S1) est mesurée indirectement ou directement et, en dépendance d'un écart en plus ou en moins d'une vitesse de modification (WN) prédéfinie, le courant de soudage (ISS) est coupé plus tôt ou plus tard quand à l'apparition du maximum (Smax) d'un intervalle des électrodes de soudure (S. S1) et / ou est ainsi prédéfini pour le soudage suivant.

9. Dispositif de soudage par points selon l'une des revendications précédentes,
**caractérisé en ce que**, pendant la durée du temps de soudage (tS) une vitesse de modification (W, W1) de l'intervalle des électrodes de soudure (S, S1) est mesurée indirectement ou directement et, en dépendance d'un écart en plus ou en moins d'une vitesse de modification prédéfinie (WN) une pente (N) de l'augmentation de courant et / ou un courant maximal (IM) réduit resp. augmenté, agissant à l'encontre de l'écart en plus ou en moins, est prédéterminé pour la génératrice de courant de soudage (IS).
